# EUROPEAN PATENT SPECIFICATION

(11) **EP 0 612 927 B1**
(45) Date of publication and mention of the grant of the patent: **22.04.1998**
(21) Application number: 94301163.5
(22) Date of filing: 18.02.1994
(51) Int. Cl.: F16C 11/06

(54) **Pivot joint for vehicle wiper linkage**
Zapfengelenk für Kraftfahrzeugwischerverbindung
Articulation à pivot pour connection d'essuie-glace de véhicule

(30) Priority: 26.02.1993 GB 9303877
(43) Date of publication of application: 31.08.1994
(73) Proprietor: NISSAN EUROPEAN TECHNOLOGY CENTRE LIMITED, Sunderland, Tyne & Wear SR5 3ND (GB)
(72) Inventor: Shepherd, Ian, Northampton, NN7 1BY (GB)
(74) Representative: Godwin, Edgar James

(56) References cited:
- DE-C- 966 855
- FR-A- 1 379 871
- GB-A- 771 868
- GB-A- 1 196 088
- GB-A- 2 112 852
- US-A- 2 836 442
- US-A- 2 934 350
- US-A- 3 025 090

## Description

This invention relates to a pivot joint, in particular for a vehicle wiper linkage.

In an automobile vehicle, at least one windscreen wiper is provided, driven by an electric motor by way of a suitable linkage. Similar wipers may be provided for a rear window and/or headlamps, for example. In each case the space available to accommodate the electric motor and the linkage is restricted, so that it is usually impossible for the pivot axes of the linkage to be parallel and co-planar. Accordingly, it is necessary to provide pivot joints comprising two parts which can oscillate relative to each other.

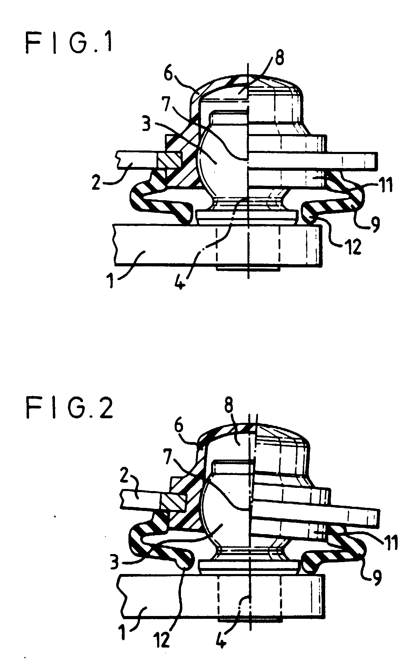

Figures 1 and 2 show a known oscillating pivot joint between two arms 1,2 of a vehicle wiper linkage. The joint is a ball joint comprising a male member or ball 3, fixed to one arm 1 and having a pivot axis 4, and a female member or cap 6 fixed to the other arm 2 and oscillatable about a centre 7. An enclosed space 8 between the members 3, 6 is filled with grease. An annular seal 9 of generally C-shaped radial cross-section is tightly fitted on a cylindrical portion 11 of the cap 6. The resiliently flexible seal 9 is compressed between the arms 1,2 and its free edge portion 12 runs on the arm 1 as the cap 6 pivots about the axis 4. The pre-compression maintains the contact between the edge portion 12 and the arm 1 as the cap 6 oscillates about the centre 7. The purpose of the seal 9 is to prevent the ingress of material which might cause abrasion at the interface between the members 3, 6, and also to prevent leakage of grease.

Hitherto, the above-described ball joint has been considered to be satisfactory. However, prolonged testing of a vehicle wiper linkage including such ball joints revealed a problem of increasingly noisy operation of the linkage. An investigation of the tested joint revealed that the increasing noise was to be due to deterioration of the lubrication provided by the grease.

This was found to be caused by the fact that the existing seal does not sufficiently prevent the ingress of water into the ball joint and that this water degrades and also gradually washes away the grease. During the oscillation of the cap 6 (see Figure 2) the compression of one side of the seal 9 causes a restriction of the necessary expansion of the opposite side so that the edge portion 12 locally loses sealing contact with the surface of the arm 1 (the effect being exaggerated in Figure 2). Thus water (which is commonly present during normal operation of a vehicle wiper system) can periodically enter inside the seal 9. This problem is especially prominent where the linkage arrangement requires a greater oscillation angle between the arm 1 and the cap 6.

What is desired is a pivot joint in which this problem is avoided or at least mitigated.

US-A-2 934 350 discloses a pivot joint for a vehicle wheel suspension, comprising interengaging male and female members, the male member having a part-spherical head and a neck, and an annular seal encircling the male member, the joint having a centre about which the members can pivot and oscillate relative to each other, the annular seal having a peripheral wall portion and a base portion constituting a body of rotation of generally L-shaped cross-section, the female member having an external annular sealing surface over which the peripheral wall portion of the annular seal slides in intimate contact during relative oscillation of the members, the peripheral wall portion remaining in sealing contact with the annular sealing surface along its whole circumferential length throughout the given oscillation range of the joint.

A similar pivot joint is known from DE-C-966 855, whereby the base portion has an inner lip which extends towards the female member and is in intimate contact with the neck.

The present invention provides a pivot joint for a vehicle wiper linkage, as set forth in claim 1.

The invention will be described, by way of example, with reference to the accompanying drawings, which:
Figure 1 is a part-sectioned view of a known pivot joint;
Figure 2 is a part-sectioned view of the known pivot joint, in a condition in which one part of the joint is tilted relative to the other;
Figure 3 is a side view of a vehicle windscreen wiper drive arrangement;
Figures 4 to 6 show parts of the drive arrangement in plan view; and
Figures 7 and 8 are front elevational views corresponding to Figures 5 and 6 respectively;
Figure 9 is a part-sectioned view of a single pivot joint of the drive arrangement, on an enlarged scale;
Figure 10 is a view similar to Figure 9, but with the parts of the joint tilted relative to each other;
Figure 11 is a fragmentary diagrammatic view of a modified pivot joint;
Figure 12 is a part-sectioned exploded view of a double pivot joint, the seals not being shown.

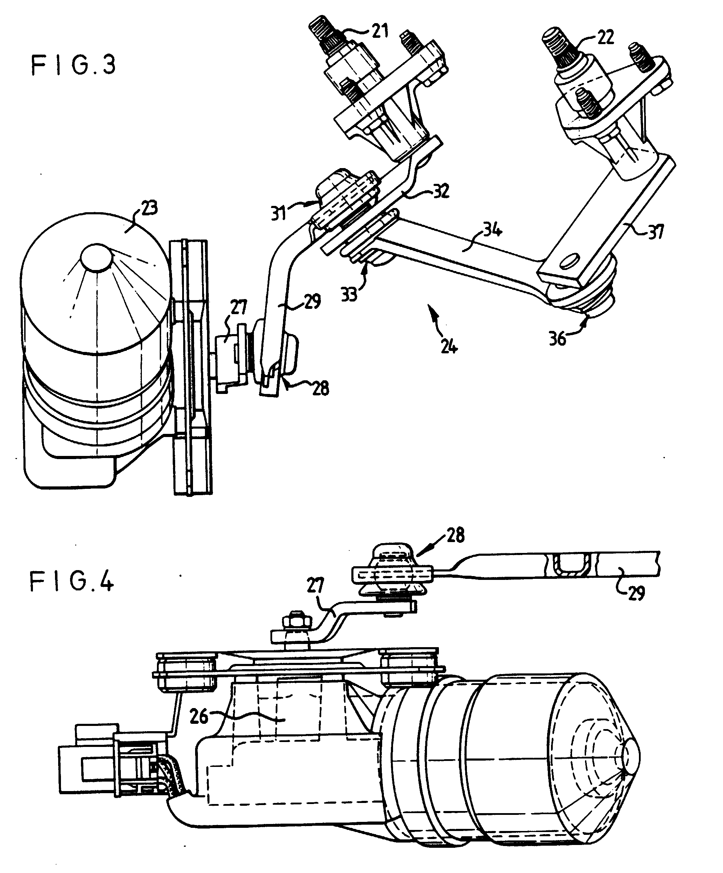

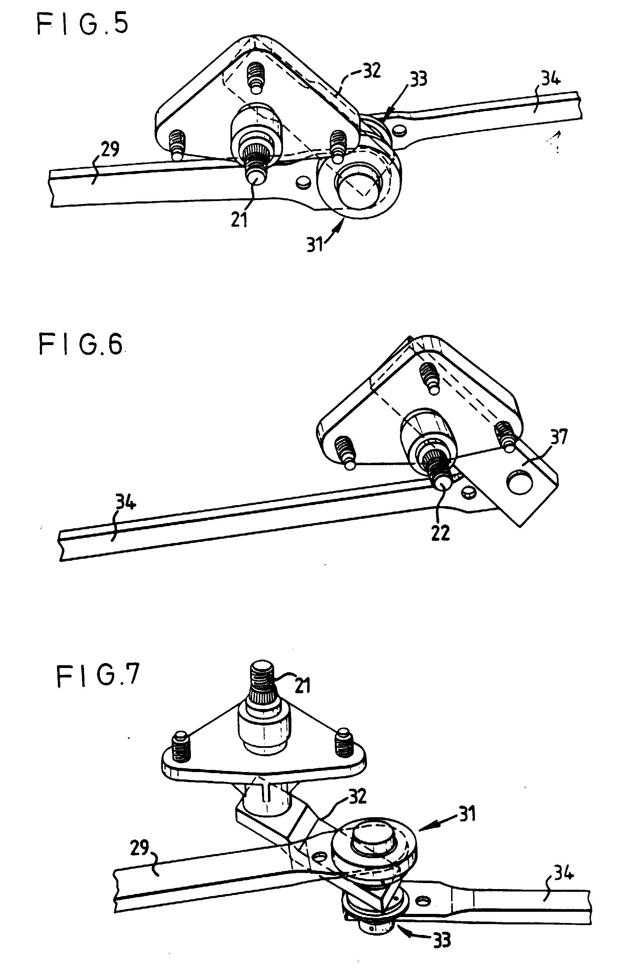

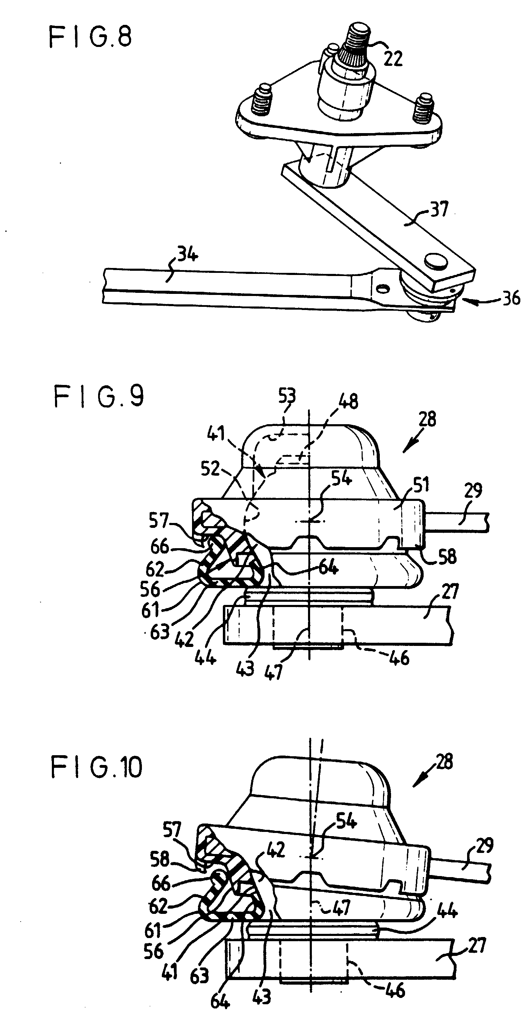

Referring first to Figures 3 to 8, the drawings illustrate a vehicle windscreen wiper drive arrangement having two spigots 21,22 on which wiper arms (not shown) are to be fixed and which are driven in reciprocal rotation by an electric motor 23 by way of a linkage 24. The motor 23 drives a reduction gear-box 26 whose output drive a crank arm 27 connected by a first pivot joint 28 to one end of a link arm 29 whose other end is connected by a second pivot joint 31 to a crank arm 32 rigid with the spigot 21. The crank arm 32 is also connected by a third pivot joint 33 (forming a double-decker pivot joint with the second pivot joint 32) to one end of a link arm 34 whose other end is connected by a fourth pivot joint 36 to a crank arm 37 rigid with the spigot 22. The first and second joints 28, 31 are similar to each other and larger than the third and fourth joints 33,36, which are also similar. The interengaging parts of the double-decker joints (32/33) are shown in Figure 15. The first joint 28 is shown in Figures 9 and 10.

Referring now to Figure 9, the pivot joint comprises a male member in the form of a nickel-plated steel ball member 41 which has a part-spherical head 42 smoothly connected by a neck 43 to a collar 44 fixed on the crank arm 27 by means of a press-fitted spigot 46. The ball member 41 defines a pivot axis 47, about which the ball member 41 is rotationally symmetric, and is fitted in a female member in the form of a cap 51 made of polyamide or another suitable plastics material. The cap 51 is moulded on the end of the link arm 29 and defines a cavity having a part-spherical surface 52 and a space 53 filled with lubricating grease. The part-spherical surface 52 and the part-spherical head 42 are in intimate sliding contact and having a common centre 54 about which the two members 41,51 can oscillate relative to each other through an angle of at least 20° and at most 25° which is limited by a stop extension 48 on the head 42.

A resiliently flexible annular seal 61, made of synthetic rubber, encircles the ball member 41 and is in intimate contact with both of the members 41, 51. The seal 61 is constituted by a body of rotation of a generally L-shaped acute angled cross-section, with a peripheral wall 62 and a base 63. A lip 64 on the internal peripheral edge of the base 63 extends towards the cap 51 and is in frictional contact with the curved surface of the neck 43 so that the seal 61 tends to turn with the ball member 41 about its axis 47 when the arms 27, 29 pivot about this axis, but does have freedom to slide in relation to the neck 43 if necessary during oscillation of the link arm 29 about the centre 54.

The upper edge portion 66 of the seal 61 is enlarged (which enhances sealing) and is of rounded cross-section (which facilitates sliding). The portion 66 is in free-running sealing contact with an annular sealing surface comprising a tapering surface 56 and an outer extension 57, on the cap 51. The surface 56 is a part-spherical surface whose centre substantially coincides with the centre 54.

When the link arm 29 tilts relative to the crank arm 27, as the crank arm 27 is rotated, the cap 51 oscillates about the centre 54 relative to the ball member 41, as shown in Figure 10. On one side of the axis 47 the enlarged seal edge portion 66 leaves contact with the surface extension 57 of the cap 51 and slides on the tapering surface 56. At the opposite side of the axis 47 the seal 61 is pushed down by the surface extension 57. This pressure tends to cause the seal wall 62 to flex towards the base 63, causes the outer edge of the base 63 to descend, and eventually causes the upper edge portion 66 to move outwards (which motion is limited by a rim 58). The seal 61 remains in sealing contact with the annular sealing surface (56/57) and with the neck 43, along its whole circumferential length, throughout the range of oscillation of the link arm 29 about the centre 54.

Thus, the above-described pivot joint provides the advantage that at no time during its cycle of operation does the seal provide a path for ingress of water. Furthermore, because the seal can run freely over its contact surface with the cap, a wide oscillation range can be accommodated, giving wide freedom in the design of the linkage and allowing the designer more efficient use of the space available.

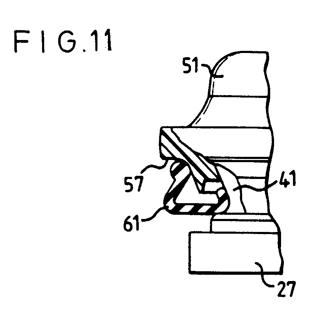

Various modifications may be made within the scope of the invention. For example, as shown in Figure 11, the rim (58) may be omitted from the cap 51; also the surface extension 57 may be slightly bevelled.

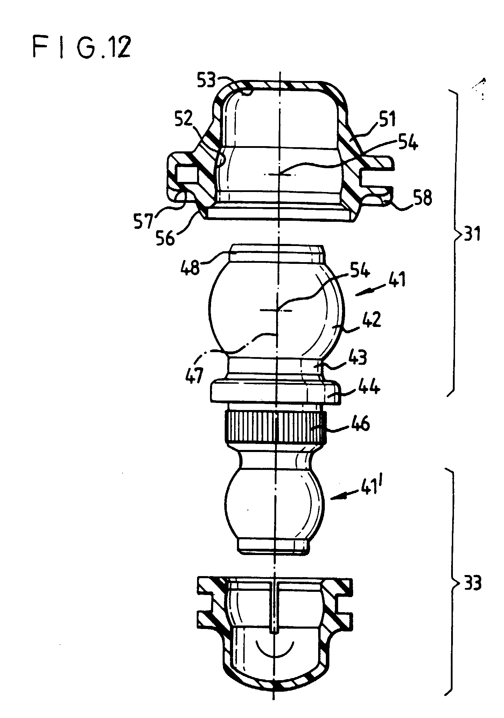

As mentioned above, the prior joints 31,33, and 36 are similar to the pivot joint 28, the joints 33 and 36 being smaller (e.g. 12 mm diameter ball instead of 16 mm). As shown in Figure 12 the two ball members 41,41' of the joints 31 and 33 (on the same crank arm 32) can be integrally connected together, being aligned on the same axis, so that only a single spigot 46 (of larger diameter than the ball member 41') ) is required.

## Claims

1. A pivot joint (28) for a vehicle wiper linkage (24), comprising interengaging male and female members (41,51), the male member (41) having a part-spherical head (42) smoothly connected by a neck (43) to a collar (44), and an annular seal (61) encircling the male member (41), the joint (28) having a centre (54) about which the members (41,51) can pivot and oscillate relative to each other, the annular seal (61) having a peripheral wall portion (62) and a base portion (63) constituting a body of rotation (62, 63) of generally L-shaped radial cross-section, the L-shaped cross-section being acute angled, the female member (51) having an external annular sealing surface (56,57) over which the peripheral wall portion (62) of the annular seal (61) slides in intimate contact during relative oscillation of the members (41,51), the peripheral wall portion (62) remaining in sealing contact with the annular sealing surface (56,57) along its whole circumferential length throughout the given oscillation range of the joint (28), the base portion (63) of the annular seal (61) bearing against the collar (44) and extending outwards beyond it, the base portion (63) having an inner lip (64) which extends towards the female member (51) and is in intimate frictional contact with the neck (43), the lip (64) being free to slide in relation to the neck (43).

2. A joint as claimed in claim 1, in which the annular sealing surface (56,57) comprises an annular substantially part-spherical surface (56) having a centre substantially coincident with the said centre (54) of oscillation.

3. A joint as claimed in claim 2, in which the annular sealing surface (56,57) includes an annular outer extension (57) connected to the part-spherical surface (56).

4. A joint as claimed in any preceding claim, in which the female member (51) has a rim (58) at the periphery of the annular sealing surface (56,57).

5. A joint as claimed in any preceding claim, in which the peripheral wall portion (62) of the annular seal (61) has an enlarged edge portion (66) in contact with the annular sealing surface (56,57).

6. A joint as claimed in any preceding claim, in which the female member (51) has a part-spherical internal surface (52) engaging the part-spherical head (42) of the male member (41).

7. A joint as claimed in any preceding claim, in which the male member (41) is made of metal.

8. A joint as claimed in any preceding claim, in which the female member (51) is made of plastics material.

9. A joint as claimed in any preceding claim, in which the given oscillation range is at least 20°.

10. A joint as claimed in any preceding claim, in which the given oscillation range is at most 25°.

11. A joint as claimed in any preceding claim, comprising a further pair of interengaging male and female members with an annular seal, the two male members (41,41') ) being connected together and aligned on the same pivot axis (47).

## Patentansprüche

1. Zapfengelenk (28) für ein Fahrzeugwischergestänge (24), mit einem inneren und einem äußeren Element (41, 51), die ineinander eingreifen, wobei das innere Element (41) einen teilweise sphärischen Kopf (42) hat, der durch einen Hals (43) mit einem Kragen (44) glatt verbunden ist, und einer ringförmigen Dichtung (61), die das innere Element (41) umschließt, wobei das Gelenk (28) einen Mittelpunkt (54) hat, um den die Elemente (41, 51) relativ zueinander geschwenkt werden können und schwingen können, die ringförmige Dichtung (61) einen peripheren Wandbereich (62) und einen Basisbereich (63) hat, die einen Rotationskörper (62, 63) von im allgemeinem L-förmigem, radialem Querschnitt bilden, der L-förmige Querschnitt einen spitzen Winkel hat, das äußere Element (51) eine äußere, ringförmige Abdichtungsoberfläche (56, 57) hat, über die der periphere Wandbereich (62) der ringförmigen Dichtung (61) während der relativen Schwingung der Elemente (41, 51) bei innigem Kontakt gleitet, der periphere Wandbereich (62) innerhalb des vorgegebenen Schwingungsbereichs der Dichtung (28) über seine ganze Umfangslänge in abdichtendem Kontakt mit der ringförmigen Abdichtungsoberfläche (56, 57) bleibt, der Basisbereich (63) der ringförmigen Dichtung (61) gegen den Kragen (44) drückt und sich nach außen über den Kragen (44) hinaus erstreckt, der Basisbereich (63) eine innere Lippe (64) hat, die sich zu dem äußeren Element (51) hin erstreckt und in innigem Reibungskontakt mit dem Hals (43) steht, und die Lippe (64) bezüglich des Halses (43) frei gleiten kann.

2. Gelenk gemäß Anspruch 1, wobei die ringförmige Abdichtungsoberfläche (56, 57) eine ringförmige, im wesentlichen teilweise sphärische Oberfläche (56) aufweist, die einen Mittelpunkt hat, der mit dem Schwingungsmittelpunkt (54) im wesentlichen zusammenfällt.

3. Gelenk gemäß Anspruch 2, wobei die ringförmige Abdichtungsoberfläche (56, 57) eine mit der teilweise sphärischen Oberfläche (56) verbundene, ringförmige äußere Verlängerung (57) umfaßt.

4. Gelenk gemäß irgendeinem vorhergehenden Anspruch, wobei das äußere Element (51) bei dem Umfang der ringförmigen Abdichtungsoberfläche (56, 57) einen Rand (58) hat.

5. Gelenk gemäß irgendeinem vorhergehenden Anspruch, wobei der periphere Wandbereich (62) der ringförmigen Dichtung (61) einen verbreiterten Randbereich (66) hat, der in Kontakt mit der ringförmigen Abdichtungsoberfläche (56, 57) steht.

6. Gelenk gemäß irgendeinem vorhergehenden Anspruch, wobei das äußere Element (51) eine teilweise sphärische innere Oberfläche (52) hat, die im Eingriff mit dem teilweise sphärischen Kopf (42) des inneren Elements (41) steht.

7. Gelenk gemäß irgendeinem vorhergehenden Anspruch, wobei das innere Element (41) aus Metall besteht.

8. Gelenk gemäß irgendeinem vorhergehenden Anspruch, wobei das äußere Element (51) aus Kunststoff besteht.

9. Gelenk gemäß irgendeinem vorhergehenden Anspruch, wobei der vorgegebene Schwingungsbereich mindestens 20° beträgt.

10. Gelenk gemäß irgendeinem vorhergehenden Anspruch, wobei der vorgegebene Schwingungsbereich höchstens 25° beträgt.

11. Gelenk gemäß irgendeinem vorhergehenden Anspruch, das ein weiteres Elementpaar aus einem inneren und äußeren Element, die ineinander eingreifen, mit einer ringförmigen Dichtung aufweist, wobei die zwei inneren Elemente (41, 41') miteinander verbunden sind und auf derselben Zapfenachse (47) ausgerichtet sind.

## Revendications

1. Joint à pivot (28) pour une connexion d'essuie-glace de véhicule (24) comprenant des éléments mâle et femelle en contact mutuel (41, 51), l'élément mâle (41) ayant une tête (42) en forme de partie de sphère se raccordant progressivement par un étranglement (43) à un collet (44), et un joint annulaire (61) encerclant l'élément mâle (41), le joint (28) ayant un centre (54) autour duquel les éléments (41, 51) peuvent pivoter et osciller l'un par rapport à l'autre, le joint annulaire (61) ayant une partie de paroi périphérique (62) et une partie de base (63) constituant un corps de rotation (62, 63) de section transversale radiale généralement en forme de L, la section transversale en forme de L étant à angle aigu, l'élément femelle (51) ayant une surface d'étanchéité annulaire externe (56, 57) sur laquelle la partie de paroi périphérique (62) du joint annulaire (61) glisse en contact intime pendant l'oscillation relative des éléments (41, 51), la partie de paroi périphérique (62) restant en contact d'étanchéité avec la surface d'étanchéité annulaire (56, 57) sur toute la longueur de sa périphérie dans tout l'intervalle d'oscillation donné du joint (28), la partie de base (63) du joint annulaire (61) portant sur le collet (44) et s'étendant vers l'extérieur au-delà de celui-ci, la partie de base (63) ayant une lèvre intérieure (64) qui s'étend vers l'élément femelle (51) et qui est en contact intime à frottement avec l'étranglement (43), la lèvre (64) pouvant glisser par rapport à l'étranglement (43).

2. Joint selon la revendication 1, dans lequel la surface d'étanchéité annulaire (56, 57) comprend une surface annulaire essentiellement en forme de partie de sphère (56) ayant un centre coïncidant essentiellement avec ledit centre d'oscillation (54).

3. Joint selon la revendication 2, dans lequel la surface d'étanchéité annulaire (56, 57) comporte un prolongement externe annulaire (57) raccordé à la surface (56) en forme de partie de sphère.

4. Joint selon l'une quelconque des revendications précédentes, dans lequel l'élément femelle (51) a un rebord (58) à la périphérie de la surface d'étanchéité annulaire (56, 57).

5. Joint selon l'une quelconque des revendications précédentes, dans lequel la partie de paroi périphérique (62) du joint annulaire (61) a une partie de bord agrandie (66) en contact avec la surface d'étanchéité annulaire (56, 57).

6. Joint selon l'une quelconque des revendications précédentes, dans lequel l'élément femelle (51) a une surface interne (52) en forme de partie de sphère en contact avec la tête (42) en forme de partie de sphère de l'élément mâle (41).

7. Joint selon l'une quelconque des revendications précédentes, dans lequel l'élément mâle (41) est constitué de métal.

8. Joint selon l'une quelconque des revendications précédentes, dans lequel l'élément femelle (51) est constitué de matière plastique.

9. Joint selon l'une quelconque des revendications précédentes, dans lequel l'intervalle d'oscillation déterminé est d'au moins 20°.

10. Joint selon l'une quelconque des revendications précédentes, dans lequel l'intervalle d'oscillation déterminé est de 25° au plus.

11. Joint selon l'une quelconque des revendications précédentes, comprenant une paire supplémentaire d'éléments mâle et femelle en contact mutuel avec un joint annulaire, les deux éléments mâles (41, 41') étant assemblés l'un à l'autre et étant alignés sur le même axe de pivot (47).
